(19) Europäisches Patentamt
European Patent Office
Office européen des brevets

(11) Veröffentlichungsnummer: **0 410 230 A2**

(12) **EUROPÄISCHE PATENTANMELDUNG**

(21) Anmeldenummer: **90113422.1**

(22) Anmeldetag: **13.07.90**

(51) Int. Cl.5: **C08L 77/00**, C08K 5/53, C08G 69/30

(30) Priorität: **26.07.89 DE 3924680**
**26.07.89 DE 3924681**

(43) Veröffentlichungstag der Anmeldung: **30.01.91 Patentblatt 91/05**

(84) Benannte Vertragsstaaten: **DE FR GB IT NL**

(71) Anmelder: **BAYER AG**

**D-5090 Leverkusen 1 Bayerwerk(DE)**

(72) Erfinder: **Heinz, Hans-Detlef, Dr.**
**Breslauer Strasse 31**
**D-4150 Krefeld(DE)**
Erfinder: **Schulte, Helmut**
**Horstdyk 73 a**
**D-4150 Krefeld(DE)**
Erfinder: **Buysch, Hans-Josef, Dr.**
**Brandenburger Strasse 28**
**D-4150 Krefeld(DE)**

(54) **Verfahren zur Herstellung hochmolekularer Polyamide.**

(57) Die Erfindung betrifft ein Verfahren zur Herstellung teilchenförmiger, hochmolekularer Polyamide, die nach dem Verfahren hergestellten teilchenförmigen, hochmolekularen Polyamide, die Verwendung dieser Polyamide zur Herstellung von Formkörpern, speziell durch Extrusion oder Blasformen sowie die aus den erfindungsgemäßen Polyamiden hergestellten Gegenstände. Das Verfahren ist dadurch gekennzeichnet, daß Polyamide mit Konzentraten bestimmter phosphorhaltiger Verbindungen vermischt, zu Granulaten verarbeitet und diese Granulate zu hochmolekularen Polyamiden festphasen-nachkondensiert werden.

EP 0 410 230 A2

## VERFAHREN ZUR HERSTELLUNG HOCHMOLEKULARER POLYAMIDE

Die Erfindung betrifft ein Verfahren zur Herstellung teilchenförmiger, hochmolekularer Polyamide, die nach dem Verfahren hergestellten teilchenförmigen, hochmolekularen Polyamide, die Verwendung dieser Polyamide zur Herstellung von Formkörpern, speziell durch Extrusion oder Blasformen sowie die aus den erfindungsgemäßen Polyamiden hergestellten Gegenstände. Das Verfahren ist dadurch gekennzeichnet, daß Polyamide mit Konzentraten bestimmter phosphorhaltiger Verbindungen vermischt, zu Granulaten verarbeitet und diese Granulate zu hochmolekularen Polyamiden festphasen-nachkondensiert werden.

Polyamide sind eine seit vielen Jahren für eine Vielzahl praktischer Anwendungen bewährte Klasse von Polymeren, die nach verschiedenen Verfahren hergestellt, die aus sehr unterschiedlichen Bausteinen synthetisiert und die im speziellen Anwendungfall, allein oder auch in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden können.

Zur Herstellung der Polyamide sind eine Vielzahl von Verfahrensweisen bekannt geworden, wobei, je nach gewünschtem Endprodukt, unterschiedliche Monomerbausteine zur Bestimmung der Matrix-Natur, verschiedene Kettenregler zur Einstellung eines angestrebten mittleren Molekulargewichts oder auch Monomere mit "reaktiven" Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden.

Die technisch relevanten Verfahren zur Herstellung von Polyamiden laufen ausnahmslos über die Polykondensation (in diesem Rahmen wird auch die hydrolytische Polymerisation von Lactamen als Polykondensation verstanden) in der Schmelze. Diese Verfahren liefern aber wegen der mit steigendem Molekulargewicht sehr rasch wachsenden Schmelzviskosität nur relativ niedermolekulare Produkte, da eine zu hohe Schmelzviskosität zu verschiedenen Problemen führt.

So wird die Temperaturführung sowie die Entfernung des Reaktionswassers immer schwieriger, und die lange Reaktionszeit bei den notwendigen hohen Temperaturen führt in verstärktem Maß zu Nebenreaktionen und Gelteilchen bildung, die die Qualität des Endprodukts drastisch verschlechtern können. Auch das Abspinnen wird zunehmend schwieriger bei sehr hohen Schmelzviskositätswerten.

Hier bietet die Festphasennachkondensation (NK) entscheidende Vorteile. Aufgrund der weitaus geringeren Reaktionstemperaturen (ca. 150 bis 230 °C, je nach PA, im Vergleich zu 250 bis 280 °C bei der Schmelzkondensation) wird die Gefahr unerwünschter Nebenreaktionen und Vergelung reduziert; die Tatsache, daß es sich bei dem nachzukondensierenden Material um definierte Partikel mit vorhandenem Zwischenteilchenvolumen handelt, erleichtert zusammen mit der Variante, das Granulat kontinuierlich zu bewegen, z.B. in Taumeltrocknern, die Aufrechterhaltung einer gleichmäßigen Reaktionstemperatur sowie die Entfernung des Reaktionswassers. Da es sich um Partikel handelt, kommt es auch nicht zu Abspinnproblemen.

Das Festphasen-Nachkondensationsverfahren wird zwar industriell im großen Maße zur Herstellung höhermolekularer Polyamide eingesetzt, dennoch beinhaltet auch dieses Verfahren eine Reihe von Nachteilen, die ihre Ursache in der relativ niedrigen Nachkondensationsgeschwindigkeit haben. So erfordert das übliche Nachkondensationsverfahren immer noch einen hohen Zeit- und Energieaufwand. Aufgrund der beträchtlichen Verweilzeit bei Reaktionstemperatur ist das Verfahren außerdem in hohem Maße anlagenintensiv. Die NK-Geschwindigkeit kann zwar durch Temperaturerhöhung gesteigert werden, was aber wiederum in verstärktem Maße zu Nebenreaktionen, Vergelung und anderen Problemen führt.

Daher ist eine Steigerung der NK-Geschwindigkeit durch beliebige Temperaturerhöhung nicht sinnvoll. Im Gegenteil sogar, zur Schonung des Produkts sollte die Temperatur so niedrig wie möglich gehalten werden.

Weiterhin sind die erreichbaren Molekulargewichte begrenzt, da die Viskositätswerte der Produkte i.a. gegen ein Plateau laufend. Die Höhe dieses Viskositätsplateaux kann zwar durch Temperaturerhöhung gesteigert werden, doch treten dann wiederum die im vorigen Abschnitt geschilderten Probleme auf.

Eine Erhöhung der NK-Geschwindigkeit kann auch durch Anlegen von Vakuum erzielt werden; jedoch hat es sich gezeigt, daß dann i.a. Sauerstoffeinbrüche erfolgen, was zu Verfärbungen des Produkts führt.

Es besteht daher Bedarf an einem Verfahren, welches in technisch einfach beherrschbarer Weise die Herstellung hochmolekularer, teilchenförmiger PA in geringer Reaktionszeit und unter schonenden Bedingungen erlaubt.

Weiterhin wäre es wünschenswert, Polyamide mit sehr hoher Schmelzviskosität, wie sie z.B. für das Extrusionsblasformen großer Hohlkörper, z.B. KFz-Tanks, benötigt werden, gut und schnell herstellen zu

können.

Überraschend wurde nun ein Verfahren gefunden, mit dem, ausgehend von üblichen, vergleichsweise niedermolekularen Primärpolyamiden hohe Nachkondensationsgeschwindigkeiten und/oder sehr hohe Molekulargewichte erzielt wer den können, wenn nämlich nach Schmelzvermischung dieser Primärpolyamide mit Konzentraten spezieller Katalysatoren auf Phosphor-Basis und anschließender Granulierung diese phosphorhaltigen, vergleichsweise niedermolekularen Primärpolykondensate in üblicher Weise festphasennachkondensiert werden. Erfindungsgemäß ist das Verfahren durch eine bei gleichen Bedingungen um mindestens 100 % erhöhte (Anfangs)Nachkondensationsgeschwindigkeit und/oder durch deutlich höhere Endviskositäten gekennzeichnet gegenüber dem Ausgangspolyamid. Überraschend ist weiterhin, daß - je nach Ausgangsmolekulargewicht des nachzukondensierenden Primärpolyamids - Typen mit besonders hohen Lösungsviskositätswerten, die sich durch hohe Schmelzviskosität auszeichnen, nach dem erfindungsgemäßen Verfahren in einfacher Weise hergestellt werden können.

Gegenstand der Erfindung ist daher ein Verfahren zur Herstellung teilchenförmiger, hochmolekularer Polyamide durch Festphasennachkondesation, dadurch gekennzeichnet, daß

1. vergleichsweise niedermolekulare, teilchenförmige Polyamide mit

2. mindestens einem Konzentrat (Masterbatch), hergestellt aus

2.1 mindestens einer der Phosphorverbindungen der allgemeinen Formeln (I) und (V)

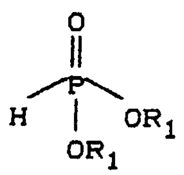

(I)

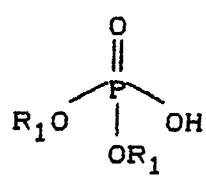

(II)

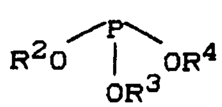

(III)

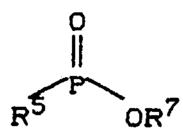

(IV)

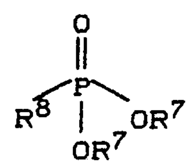

(V)

wobei

$R^1$ unabhängig voneinander für Wasserstoff oder einen (Ar)alkylrest mit 1 bis 22 C-Atomen oder einen (Alk)arylrest mit 1 bis 20 C-Atomen oder für Metallatome wie Na, K, oder auch für $NH_4$ steht,

oder auch der entsprechenden oligomeren oder polymeren Homologen der Verbindungen (I) und (II), die offenkettig oder cyclisch sein können, und ihrer Salze (Na, K, $NH_4$ u.a.m) bzw. Ester, und wobei

$R^2$ - $R^4$, $R^8$ unabhängig voneinander einen $C_{1-22}$-(Ar)alkylrest oder einen $C_{6-25}$-(Alk)arylrest bedeuten,

$R^5$, $R^6$ unabhängig voneinander H oder einen (Ar)alkylrest mit 1 bis 22 C-Atomen oder einen (Alk)-arylrest mit 6 bis 25 C-Atomen bedeutet,

$R^7$ unabhängig voneinander Wasserstoff oder Metallatome wie Na, K, oderauch $NH_4$ bedeuten, oder auch gleich $R^2$-$R^4$ ist,

und wobei die Reste $R_5$, $R_6$, $R_8$ auch mehrbindig sein können, so daß mehr als ein Phosphoratom pro Molekül enthalten sein kann,

und einem

2.2. vorzugsweise, jedoch nicht notwendigerweise, gleichhoch oder niedriger als das Polyamid 1. schmelzenden bzw. erweichenden Thermoplasten,

in der Schmelze homogen vermischt werden, die Schmelze abgekühlt und granuliert wird und dieses Granulat in üblicher Weise in der festen Phase bei Temperaturen von ungefähr 145 bis 195 °C nachkondensiert wird, wobei der Phosphorgehalt des nachzukondensierenden Polyamids, eingebracht durch die Konzentrate 2., im Bereich von 5 bis 300 ppm liegt, und wobei die (Anfangs)Geschwindigkeit der Nachkondensation um mindestens 100 % gegenüber einem katalysatorfreien Polyamid erhöht ist.

Gegenstand der Erfindung sind auch die nach dem erfindungsgemäßen Verfahren hergestellten Polyamide.

Beispiele für erfindungsgemäß einzusetzende Katalysatoren 2.1 sind Phosphorsäure, Diphosphorsäure, Triphosphorsäure, Polyphosphorsäuren, Natriumdihydrogenphosphat, Dinatriummonohydrogenphosphat, Ammoniumphosphat, Metapolyphosphorsäuren, Natrium-, Kalium-, Ammoniumsalze der Polyphosphorsäuren, phosphorige Säure, Diester der phosphorigen Säure wie z.B. Di-n-butylphosphit, Di-n-phenylphosphit, Di-n-decyl-phosphit und Di-n-stearyl-phosphit, Monoester der phosphorigen Säure wie z.B. Phosphorigsäurebutylester, Phosphorigsäurehexylester und Phosphorigsäure-stearylester, Phosphorsäuremonoester wie z.B. Phosphorsäuredecylester oder Phosphorsäurestearylester und Diester der Phosphorsäure wie z.B. Diphenylphosphat oder Distearylphosphat sowie Monoester von Phosphonsäuren wie z.B. Methylphosphonsäurephenylester oder Phenylphosphonsäurestearylester, Natriumhydrogenphosphit, Ammoniumphosphit, Triester der phosphorigen Säure wie Triphenylphosphit, Tris(nonylphenyl)phosphit, Tris-(2,4-di-t-butylphenyl)-phosphit, Phosphonsäuren wie Methylphosphonsäure und Phenylphosphonsäure, Phosphonsäurebisester wie Phenylphosphonsäurediphenylester, Mononatrium und Kaliumsalze, Ammoniumsalze der Phosphonsäuren, Hyprophosphorige Säure und ihre Salze u.a.m. Auch Diphosphonsäure wie Ethan-1,2-diphosphonsäure, oder Polyvinylphosphonsäuren sind geeignet, bzw. ihre oben genannten Derivate.

Bevorzugte Katalysatoren 2.1 sind Phosphorsäure und ihre höheren Homologen (Diphosphorsäure etc.), die Mono- bzw. Di-Natrium- bzw. Kaliumsalze sowie die Ammoniumsalze dieser Säuren, phosphorige Säure und ihre Mono-Natrium-, Mono-Kalium- und Ammoniumsalze, die Phosphite der Formel (II), insbesondere die Triarylphosphite, sowie die Phosphonsäuren der Formel (V) bzw. ihre Mono-Natrium-, Mono-Kalium und Ammoniumsalze, sowie Hypophosphorige Säure und ihre Ammoniumsalze.

Ganz besonders bevorzugte Katalysatoren sind Phosphorsäure sowie ihre höheren Homologen (lineare- bzw. cyclische - Polyphosphorsäure), Natriumdihydrogenphosphat, Ammoniumphosphate, Kaliumdihydrogenphosphat, phosphorige Säure, Natriumhydrogenphosphit, Kaliumhydrogenphosphit, Ammoniumphosphite, sowie oligomere oder polymere Mono-Natrium- und Mono-Kaliumsalze bzw. Ammoniumsalze der oben geanntne Polyphosphonsäuren.

In der US 3 551 548 wird ein Verfahren zur Herstellung von Fasern mit erhöhter rel. Viskosität offenbart, in dem Fasern, die spezielle Phosphorverbindungen enthalten, aus der entsprechenden niedermolekularen Schmelze hergestellt und dann die Fasern nachkondensiert werden. Die Phosphorverbindungen sollen dabei zu 0,01 bis 15 Gew.-% eingesetzt werden. Die Beispiele zeigen, daß nennenswerte Nachkondensationsgeschwindigkeiten und deutlich erhöhte Molekulargewichte nur bei gleichzeitiger Anwendung von Vakuum (Gefahr des Sauerstoffeinbruchs mit folgendem Abbau und Verfärbung) und hohen Temperaturen erzielt werden. Das Verfahren ist daher nur von geringem praktischen Nutzen.

In dem Artikel "Nylon 6 Polymerization in the solid state" (R. J. Gaymans, J. Amirtharaj, H. Kamp; J. Appl. Polym. Sci. 27 , 2513 (1982) wird die Festphasennachkondensation von Polyamid 6 bei 145 °C (Verwendung von heißem Stickstoff als Heizmedium und Spülgas), welches bei Anwesenheit von 0,1 Gew.-% Phosphorsäure hergestellt worden war, beschrieben. Die Anfangsgeschwindigkeit der Nachkondensation bleibt genauso niedrig wie die eines Vergleichs. Die erreichten Viskositäten sind erst bei relativ hohen Nachkondensationszeiten gegenüber dem Vergleich deutlich höher.

In A. Mattiussi, G. B. Gechele, Chim. Ind. 53 , 662 (1971) wird die Festphasennachkondensation von PA 6, welches bei Anwesenheit von 0,288 Gew.-% $H_3PO_4$ hergestellt worden war, bei 180 °C beschrieben. Die Anfangsgeschwindigkeit der Festphasennachkondensaion ist deutlich höher, jedoch sinkt die Geschwindigkeit dann sehr schnell auf praktisch die des Vergleichs. Es werden zwar deutlich höhere Viskositätswerte erzielt, jedoch sind sie absolut immer noch vergleichsweise gering und die Reaktionszeiten bei hohen Temperaturen zur Erzielung dieser erhöhten Viskositäten sind unangemessen groß (ca. 40 bis 80 h bei 180 °C).

In der EP 0 038 094 wird ein zweistufiges Verfahren zur Herstellung von Polyamid 46 offenbart, wobei in einer ersten Stufe ein Präpolymer erhalten und dieses dann in der festen Phase nachkondensiert wird. Es wird offen bart, daß die Festphasennachkondensation (FPNK) durch Anwesenheit von $H_3PO_4$ beschleunigt werden kann. Es werden hohe Mengen (0,1 %) eingesetzt und die FPNK muß bei sehr hohen Temperaturen, typischerweise zwischen 225 und 275 °C, durchgeführt werden.

Alle diese Verfahren des Standes der Technik können daher nicht wirklich befriedigen, insofern als entweder sehr hohe Temperaturen und/oder hohe Katalysatormengen und/oder übermäßig große Zeiten benötigt werden, um deutlich erhöhte Reaktionsgeschwindigkeiten und Molekulargewichte zu erzielen.

Diese Nachteile des Standes der Technik werden mit dem erfindungsgemäßen Verfahren überwunden, da es gestattet, in einfacher Weise bei relativ niedrigen Reaktionstemperaturen mit geringen Katalysatormengen die Anfangsgeschwindigkeit drastisch (z.B. um 500 %) zu steigern und/oder Produkte sehr hoher $\eta_{rel}$-Werte, z.B. PA 6 mit $\eta_{rel}$ = 8 - 10 und mehr (gemessen an einer 1%igen Lösung in m-Kresol bei 25 °C), in einfacher Weise und mit relativ niedrigen Reaktionszeiten herzustellen. Es stellt daher eine wertvolle Bereicherung des Standes der Technik dar.

Erfindungsgemäß wird zunächst aus den Katalysatoren 2.1 und den Thermoplasten 2.2, die bevorzugt, jedoch nicht notwendigerweise, gleich hoch oder niedriger als das nachzukondensierende Polyamid schmelzen bzw. erweichen sollen, ein Konzentrat hergestellt. Als Thermoplaste 2.2 sind erfindungsgemäß beispielsweise geeignet: PA 6, PA 66, 6/66-Copolyamide, PA 11, PA 12, 6/11-Copolyamide, PA 610, PA 1010, PA 1012, Polyetheramide, Polyetheresteramide, PA 1212, (gegebenenfalls säurefunktionenhaltiges Polyethylen, Polypropylen, Polystyrol, Styrol-Acrylnitrilcopolymere, Polymethylmethacrylat, thermoplastische Polyurethane, Ethylen-Propylen-Copolymere, Copolymere von Ethylen oder Propylen mit höheren $\alpha$-Olefinen oder Acrylaten, Butadien-Styrol-Blockcopolymere und andere mehr. Die Phosphorverbindungen der Formel (I)-(V) 2.1. sollen, je nach Bedarf oder Trägerthermoplast, in der Menge von ca. 0,05 bis ca. 20 Gew.-%, bevorzugt 0,1-10 Gew.-%, insbesondere 0,5-5 Gew.-%, zur Herstellung der Katalysator-Konzentrate 2. eingesetzt werden.

Die Herstellung der Konzentrate kann auf verschiedene Weise geschehen. Im allgemeinen werden die Konzentrate 2. durch Vermischen der Thermoplasten 2.2 mit den Phosphorverbindungen 2.1 in der Schmelze, bevorzugt in Extrudern oder Knetern, hergestellt. Zur Absenkung der Verarbeitungstemperatur können hierbei Fließhilfsmittel oder Weichmacher anwesend sein. Die Konzentratschmelze wird dann in üblicher Weise abgesponnen und (bevorzugt) granuliert.

In besonderen Fällen, insbesondere dann, wenn als Konzentrat Träger 2.2 Polyamide eingesetzt werden, können die Konzentrate auch durch Herstellung (Polykondensa tion bzw. hydrolytische Polymerisation) der betreffenden Polyamide bei Anwesenheit der entsprechenden Menge an Katalysatoren erhalten werden. Für beide Versionen weden im Beispielteil typische Vorschriften angegeben.

Die Konzentrate 2. werden dann in einem zweiten Schritt gemäß der Erfindung mit den nachzukondensierenden Polyamiden in der Schmelze, wiederum bevorzugt in Knetern oder Extrudern, vermischt, die katalysatorhaltige Polyamidschmelze in üblicher Weise abgesponnen und granuliert. Das Konzentrat 2. wird dabei in einer derartigen Menge verwendet, daß das fertige, zur Nachkondensation bereite Polyamid-Granulat einen bestimmten Phosphorgehalt aufweist. Erfindungsgemäß liegt dieser Phosphorgehalt im Bereich von 5 bis 300 ppm, bevorzugt 10 bis 200 ppm und besonders bevorzugt 20 bis 100 ppm Phosphor, bezogen auf den Polyamidanteil. Die Vermischung des nachzukondensierenden Polyamids 1. mit dem Katalysatorkonzentrat 2. geschieht im für die Verarbeitung dieses Polyamids typischen Temperaturbereich.

Die Festphasennachkondensation (FPNK) wird dann in üblicher Weise durchgeführt. Geeignet sind Temperaturen von ungefähr 145 bis 195 °C, bevorzugt 150-190 °C und besonders bevorzugt 160-185 °C, wobei die Verweilzeiten im Bereich von 1 bis 100 h, bevorzugt 2 bis 50 h und besonders bevorzugt 5 - 35 h liegen, und wobei die längeren Reaktionszeiten bevorzugt bei tieferen Temperaturen und umgekehrt angewendet werden.

Bei Polyamiden, die im angegebenen Temperaturbereich oder wenig darüber schmelzen, soll die Reaktionstemperatur immer mindestens 10 °C, bevorzugt mindestens 20 °C, unterhalb ihres Schmelzpunktes liegen. Die FPNK kann kontinuierlich oder diskontinuierlich, ggf. unter Umwälzung des Granulats, in üblichen Aggregaten erfolgen.

Das Verfahren erlaubt eine deutliche Beschleunigung der FPNK, wobei erfindungsgemäß die FPNK-Geschwindigkeit um mindestens 100 %, bevorzugt mindestens 200 % und besonders bevorzugt mindestens 450 %, erhöht wird, gegenüber Katalysator-freien Polyamid sowie die Herstellung von Polyamiden mit sehr hohen Molekulargewichten.

Geeignet sind als Polyamide 1. im Rahmen der Erfindung z.B.: PA 6, PA 66, PA 46, PA 610, PA 11, PA 12, PA 1010, PA 1012, PA 1212, PA 6T6 bzw. 6T/6, PA 6I6 und Copolyamide auf Basis PA 6 bzw PA 66. Das Molverhältnis der $NH_2$- und COOH-Endgruppen zueinander ist i.a. nicht kritisch, sollte aber nicht zu unterschiedlich sein. Bevorzugt liegt es im Bereich von 10:1 bis 1:10, besonders bevorzugt 8:1 bis 1:8 und ganz besonders bevorzugt 5:1 bis 1:5.

Die Primärkondensate 1., welche eingesetzt werden, besitzen relative Viskositäten, gemessen in m-Kresol an einer 1%igen Lösung bei 25 °C, von mindestens 2,4, bevorzugt mindestens 2,8 und besonders bevorzugt mindestens 3,3. Ihre rel. Viskosität sollte nicht höher als ungefähr 5,5, bevorzugt nicht höher als 4,5 liegen.

Bevorzugte Polyamide sind PA 6, PA 66 und Copolyamide auf Basis PA 6 bzw. PA 66. Besonders bevorzugt sind insbesondere PA und Copolyamide auf Basis PA 6.

Erfindungsgemäß sind z.B. PA 6-Typen mit rel. Viskositäten von 8-10 und mehr zugänglich, die einwandfrei m-Kresol-löslich, d.h. unvernetzt sind, und die eine sehr helle Farbe aufweisen. Gegenstand der Erfindung sind daher auch insbesondere hochmolekulare Polyamide mit rel. Viskositäten (s.o.) von mindestens 6,5 bevorzugt mindestens 7,0, besonders bevorzugt mindestens 7,5 hergestellt durch katalysierte Festphasennachkondensation mit Phosphorkatalysatoren, insbesondere nach dem erfindungsgemäßen Verfahren. Die erfindungsgemäßen Polyamide sind besonders geeignet für Extrusionsanwendungen, z.B. für

das Blasformen großer Hohlkörper.

Die relative Lösungsviskosität der hochmolekularen Polyamide kann anhand von Katalysatorkonzentration, Ausgangsmolekulargewicht, Temperatur und Zeit fast beliebig eingestellt werden. Das neue Verfahren und die neuen Polyamide sind daher eine wertvolle Bereicherung des Standes der Technik. Die Zumischung der Katalysatoren in Form der Konzentrate zu den Primärkondensaten 1. läßt eine präzise Dosierung und Vezmischung zu; die gezielte Zugabe der Katalysatoren zu einem fertigen Polyamid entkoppelt die FPNK von der Schmelzkondensation und gibt dem erfindungsgemäßen Verfahren eine große Flexibilität.

Erfindungsgemäß können die hochmolekularen Polyamide noch übliche Zusatzstoffe wie z.B. Füll- und Verstärkungsstoffe (Glasfasern, Glaskugeln, Kohlenstoffasern, Aramidfasern, mineralische Füllstoffe etc.), polymere Legierungspartner (bevorzugt bekannte Schlagzähmodifikatoren zur Erhöhung der Kälte- bzw. Trockenschlagzähigkeit, z.B. auf Basis Polybutadien, Polyacrylat oder Ethylen-Propylen-Copolymeren, und/oder amorphe Thermoplaste mit Glastemperaturen von mind. 80 °C, bevorzugt mind. 110 °C und besonders bevorzugt mind. 150 °C, wobei die polymeren Legierungspartner kompatibel oder inkompatibel und die resultierenden Legierungen ein- oder mehrphasig sein können), UV-Stabilisatoren, Antioxidantien, Flammschutzmittel, die Wasseraufnahme verringernde Zusätze, Gleitmittel, Nukleier- bzw. Antinukleiermittel, Pigmente, Farbstoffe, Entformungsmittel, Fließverbesserer usw., wie sie im Stand der Technik beschrieben sind, enthalten. Bevorzugt werden diese beispielsweise, je nach Typ des Additivs und Bedarf, den Ausgangsstoffen zur Synthese des Primärpolyamids, bei der Einarbeitung des Katalysatorkonzentrats oder auch unmittelbar vor der Verarbeitung zugegeben.

Bei der Anwesenheit von z.B. Füll-/Verstärkungsstoffen und/oder polymeren Legierungspartnern, die üblicherweise über Amin oder Säure-/Anhydridfunktionen an das Polyamid ankoppeln, kann es zur Erzielung besonders hoher Molekulargewichte vorteilhaft sein, spezielle Endgruppenverhältnisse des Polyamids einzustellen.

Das erfindungsgemäße Verfahren erlaubt, in einfacher Weise hoch- bzw. sehr hochmolekulare Polyamide in relativ kurzer Zeit herzustellen. Eine Nachkondensation kann bei Bedarf auch an einem Formteil durchgeführt werden. Bevorzugt wird jedoch übliches Granulat nachkondensiert.

Die Erfindung wird durch die folgenden Beispiele erläutert, ohne sie darauf einzuschränken. $\eta_{rel}$-Werte werden bei 25 °C anhand einer 1%igen Lösung in m-Kresol bestimmt.

## Beispiele

### Beispiele 1 und 2

Herstellung eines $H_3PO_3$- bzw. $H_3PO_4$-Konzentrates durch Extrusion

Ein niedermolekulares Polyamid 6 ($\eta_{rel}$ ca. 2,9) wurde mit einer methanolischen Lösung von $H_3PO_3$ - (Beispiel 1) bzw. $H_3PO_4$ (Beispiel 2) gerührt, das Methanol im Vakuum abgezogen und bei 250 °C über einen Einwellenextruder extrudiert.

Analytische Daten der beiden Konzentrate sind in Tabelle 1 enthalten.

### Beispiel 3

Herstellung eines $H_3PO_4$-Konzentrats durch Caprolactam-Polymerisation

10 kg Caprolactam, 600 ml Wasser und 112 g 85%ige wäßrige $H_3PO_4$ wurden in einen 25 l-Autoklaven eingefüllt, nach dreimaligem $N_2$-Ausgleich 1 h lang bei 200 °C vorkondensiert und anschließend 7 h lang bei 270 °C polymerisiert. Es wurde auf 250 °C abgekühlt und das Polyamid abgesponnen und granuliert.

Analytische Daten sind in Tabelle 1 enthalten.

### Beispiel 4

Herstellung eines $H_3PO_4$-Konzentrats durch Compoundierung

Polyamid 6 mit einer rel. Viskosität von ca. 4,0 und 85 %ige wäßrige Phosphorsäure wurden in einen Zwei-Schneckenextruder vom Typ ZSK 53 getrennt zudosiert, bei 230 °C extrudiert, abgesponnen und granuliert.

Analytische Daten sind in Tabelle 1 enthalten.

Tabelle 1

| Beispiel | Katalysator | **Menge (%)** | | |
|---|---|---|---|---|
| | | ber. | exp.[1)] | $\eta_{rel}$ |
| 1 | $H_3PO_3$ | - | 1,3 | 2,4 |
| 2 | $H_3PO_4$ | - | 0,51 | 2,7 |
| 3 | $H_3PO_4$ | - | - | .2,4 |
| 4 | $H_3PO_4$ | 0,98 | 0,85/,0,98 | 2,9 |

1) bestimmt durch Phosphor-Analyse

Beispiel 5 bis 9

Polyamid 6-Granulat wurde mit verschiedenen Mengen des in Beispiel 1 hergestellten $H_3PO_3$-Konzentrats trocken vermischt und bei 250 °C und einem Durchsatz von 30 kg $h^{-1}$ über einen ZSK 53-Doppelwellenextruder extrudiert. Es wurde als Strang abgesponnen und granuliert.

Das Granulat wurde bei 170 °C und einem $N_2$-Strom von 40 l $h^{-1}$ in einem Rotationsverdampfer (50 U/min$^{-1}$) nachkondensiert. Der Fortgang der NK wurde anhand der rel-Werte verfolgt. Die Daten sind in Tabelle 2 zusammengefaßt.

Beispiele 10 bis 13

In der für die Beispiele 5 bis 9 beschriebenen Weise wurde $H_3PO_4$ modifiziertes PA 6 (Konzentrat nach Beispiel 2) hergestellt und nachkondensiert. Die Daten sind in Tabelle 2 enthalten.

Vergleichsbeispiel 1

In derselben Weise wurde dasselbe, exakt gleichbehandelte, jedoch phosphorfreie Granulat nachkondensiert. Die Daten sind in Tabelle 2 enthalten.

Tabelle 2

| Beispiel | Katalysator | Menge (ppm P) | $\eta_{rel}$ (170° C, 40 l $h^{-1}$, 50 U/$min^{-1}$ | | | |
|---|---|---|---|---|---|---|
| | | | 0 h | 3 h | 7 h | 14 h |
| 5 | $H_3PO_3$ | 11 | 2,95 | 3,1 | 3,8 | 4,6 |
| 6 | $H_3PO_3$ | 19 | - | 3,2 | 3,8 | 4,7 |
| 7 | $H_3PO_3$ | 30-31 | - | 3,5 | 4,6 | 5,3 |
| 8 | $H_3PO_3$ | 71 | - | 3,8 | 5,1 | 5,6 |
| 9 | $H_3PO_3$ | 124 | 3,1 | 4,6 | 5,4 | 6,2 |
| 10 | $H_3PO_4$ | 18 | - | 3,5 | 3,9 | 5,15 |
| 11 | $H_3PO_4$ | 32 | 3,0 | 3,9 | 5,0 | 5,7 |
| 12 | $H_3PO_4$ | 59-60 | - | 4,4 | 5,7 | 6,15 |
| 13 | $H_3PO_4$ | 110 | 3,2 | 4,6 | 5,7 | 6,1 |
| Vgl.1 | - | - | 3,0 | 3,1 | 3,2 | 3,6 |

Beispiele 14 bis 17 und Vergleichsbeispiele 2 und 3

In der für die Beispiele 5 bis 9 beschriebenen Weise wurde PA 6-Granulat ($\eta_{rel}$ ca. 3,5) mit dem nach Beispiel 4 erhaltenen $H_3PO_4$-Konzentrat bzw. ohne Katalysator bei 270° C extrudiert.
Die FPNK wurde bei 170 und 180° C in der für die Beispiele 5 bis 9 beschriebenen Weise durchgeführt (Tab. 3).

Beispiele 18 und 19 und Vergleichsbeispiel 4

In derselben Weise wurde ein Polyamid 6-Granulat ($\eta_{rel}$ ca. 4,0) mit dem in Beispiel 4 hergestellten $H_3PO_4$-Konzentrat vermischt und extrudiert.
Die FPNK wurde bei 170° C in der üblichen Weise durchgeführt (Tab. 3).

Beispiel 20

150 kg PA 6 ($\eta_{rel}$ ca. 3,5) wurden mit 2,55 kg des nach Beispiel 3 hergestellten Konzentrats bei 20° C und einem Durchsatz von 30 kg $h^{-1}$ über einen ZSK 53-Doppelwellenextruder extrudiert, abgesponnen und granuliert.
Die FPNK erfolgte in der üblichen Weise bei 170 und 180° C (Tabelle 4).

Beispiel 21

In derselben Weise wurden 50 kg PA 6 ($\eta_{rel}$ ca. 3,9) mit 0,85 kg desselben Konzentrats extrudiert.
Die FPNK erfolgtee bei 170 und 180° C in der üblichen Weise (Tab. 4)

Tabelle 3

| Beispiel | Katalysator | Menge (ppm P) | $\eta_{rel}$ | | | | | | | |
|---|---|---|---|---|---|---|---|---|---|---|
| | | | 170°C | | | | 180°C | | | |
| | | | 0 h | 3 h | 7 h | 14 h | 0 h | 10 h | 20 h | 30 h |
| 14 | $H3PO_4$ | 27-28 | 3,8 | 4,95 | 6,85 | 8,3 | - | - | - | - |
| 15 | $H3PO_4$ | 42 | 3,9 | 6,1 | 7,9 | 9,5 | - | - | - | - |
| Vergl. 2 | - | - | 3,6 | 3,9 | 4,1 | 4,25 | - | - | - | - |
| 16 | $H3PO_4$ | 27-28 | - | - | - | - | 3,8 | 8,8 | 12,5 | 12,95 |
| 17 | $H3PO_4$ | 42 | - | - | - | - | 3,9 | 9,1 | 13,5 | 14,2 |
| Vergl. 3 | - | - | - | - | - | - | 3,6 | 4,3 | 4,7 | 4,85 |
| 18 | $H3PO_4$ | 26-27 | 4,1 | 5,8 | 8,2 | 9,3 | - | - | - | - |
| 19 | $H3PO_4$ | 41 | 4,1 | 6,65 | 9,25 | 9,9 | - | - | - | - |
| Vergl. 4 | - | - | 4,0 | 4,3 | 4,4 | 4,5 | - | - | - | - |

Tabelle 4

| Beispiel | Katalysator | Menge (ppm P) | $\eta_{rel}$ | | | | | | | | | |
|---|---|---|---|---|---|---|---|---|---|---|---|---|
| | | | 170°C | | | | | 180°C | | | | |
| | | | 0 h | 10 h | 15 h | 20 h | 30 h | 0 h | 10 h | 15 h | 20 h | 30 h |
| 20 | $H3PO_4$ | 40 | 3,85 | 9,3 | 9,7 | 10,1 | 11,0 | 3,84 | 11,4 | 12,1 | 12,5 | 13,5 |
| 21 | $H3PO_4$ | 45-46 | 3,5 | 8,4 | 9,2 | 9,8 | 10,8 | 3,5 | 10,0 | 11,1 | 11,8 | 12,7 |

Beispiele 22 und 23

Das in Beispiel 14 erhaltene Granulat mit $\eta_{rel}$ = 3,8 (O h NK) wurde zu 80 • 10 • 4 mm Prüfstäben verarbeitet.

Je 1 Stab wurde in einem Trockenschrank (180°C, 20 l $_{N2}$ $h^{-1}$, 30 h) in einem Planschlifftopf liegend bzw. stehend festphasennachkondensiert.

Die $\eta_{rel}$-Werte betrugen 11,0 (liegend) bzw. 12,5 (stehend).

Beispiel 24 (nicht erfindungsgemäß)

In der für die Beispiele 1 und 2 beschriebenen Weise wurde ein Konzentrat (1 Gew.-%) von 85 %iger $H_3PO_4$ in Polyethylen hergestellt.

Der theoretische Phosphorgehalt beträgt 0,27 %.

Beispiele 25 und 26 (nicht erfindungsgemäß)

PA 6-Granulat ($\eta_{rel}$ ca. 1,9) wurde mit je 2 % Ammoniumphosphat (Beispiel 25) bzw. Natriumdihydrogenphosphat (Beispiel 26) trocken vermischt und über einen Einwellenextruder bei 290°C extrudiert.

Der theoretische Phosphorgehalt beträgt 4160 ppm (Beispiel 25) bzw. 5170 ppm (Beispiel 26).

Beispiele 27 bis 29

In der für die Beispiele 5 bis 9 beschriebenen Weise wurde PA 6-Granulat ($\eta_{rel}$ ca. 4,0) bei 270° C mit bestimmten Mengen der nach den Beispielen 24 bis 26 hergestellten Konzentrate vermischt.

Die Festphasennachkondensation erfolgte wie für die Beispiele 5 bis 9 beschrieben.

Die Ergebnisse sind in Tabelle 4 zusammengestellt.

Vergleichsbeispiel 5

Das in den Beispielen 27 bis 29 benutzte PA 6-Granulat wurde ohne Katalysator extrudiert und nach nachkondensiert (Tabelle 4).

Beispiel 30 und Vergleichsbeispiel 6

Über einen ZSK-Doppelwellenextruder wird bei 270° C und einem Durchsatz von 30 kg $h^{-1}$ ein 30 % glasfaserverstärktes PA 6 ($\eta_{rel}$ ca. 4,0) hergestellt. Für einen Fall (Beispiel 30) wurden noch 1,5 % bezogen auf den PA-Anteil, des Konzentrats aus Beispiel 3 zugegeben, im anderen (Vergleich 6) wurde kein Konzentrat zugegeben.

Die Nachkondensation erfolgte in der üblichen Weise bei 170° C, 50 U/$min^{-1}$, 40 l $N_2$ $h^{-1}$ (Tabelle 5).

Beispiel 31 und Vergleichsbeispiel 7

Ein schlagzähes Polyamid 6 (®Durethan BC 30, ein Produkt der Bayer AG) wurde einmal ohne, einmal mit 1,5 % des Konzentrats nach Beispiel 3 bei 260° C und einem Durchsatz von 30 kg $h^{-1}$ über einen ZSK 53 Doppelwellenextruder extrudiert.

Die Nachkondensation erfolgte wie in Beispiel 30 beschrieben (Tabelle 5).

Tabelle 4

| Beispiel | Konzentrat nach Beispiel | | P (theor.) | $\eta_{rel}$ | | | |
|---|---|---|---|---|---|---|---|
| | [Gew.-% bezogen auf PA] | | [ppm] | 0 h | 3 h | 7 h | 14 h |
| 27 | 1,62 | 24 | | 4,2 | 4,9 | 6,5 | 8,0 |
| 28 | 1,64 | 25 | | 4,0 | 4,7 | 7,15 | 8,6 |
| 29 | 1,26 | 26 | | 4,2 | 5,6 | 7,7 | 9,13 |
| Vgl. 5 | - | | - | 4,1 | 4,1 | 4,3 | 4,5 |

Tabelle 5

| Beispiel | Konzentrat nach Beispiel | | $\eta_{rel}$ | | | | $V_{NK}$ [1] $[h^{-1}]$ | $V_{NK}$ [2] rel. |
|---|---|---|---|---|---|---|---|---|
| | [Gew.-%] | | 0 h | 3 h | 7 h | 14 h | | |
| 30 | 1,05 | 3 | 3,9 | 4,3 | 4,6 | 5,15 | 0,089 | 3,1 |
| Vgl. 6 | - | | 4,0 | 4,2 | 4,3 | 4,4 | 0,028 | 1 |
| 31 | 1,15 | 3 | 2,8 | 3,4 | 4,5 | - | 0,24 | 6,8 |
| Vgl. 7 | - | | 2,75 | 2,9 | 3,0 | - | 0,035 | 1 |

[1] Geschwindigkeit nach der Nachkondensation; Bsp. 30, Vgl. 6 = > 14 h; Bsp. 31, Vgl. 7 = > 0 - 7 h

[2] Relative Nachkondensationsgeschwindigkeit bezogen auf den Vergleich

Beispiel 32

Ein Gemisch aus Polyethylen (Baylon® ein Produkt der Bayer AG) und 3 % Triphenylphosphit wurde bei 250° C über einen Einwellenextruder vermischt, in ein Wasserbad abgesponnen und granuliert.

Der theoretische Phosphorgehalt beträgt 3000 ppm.

Beispiel 33

In derselben Weise wurde ein Konzentrat aus Polyethylen und 5 % eines Trialkylphosphits, synthetisiert aus Triphenylphosphit und 3 Mol eines Fettalkohols (Alfol® 1620, ein Produkt der Condea Chemie GmbH) hergestellt.

Der theoretische Phosphorgehalt beträgt ca. 1350 ppm.

Beispiele 34 + 35

In derselben Weise werden Konzentrate von 3 % Triphenylphosphit (Bsp. 34) und 5 % des in Beispiel 2 benutzten Fettalkoholphosphits (Beispiel 35) in Polypropylen hergestellt.

Die theoretischen Phosphorgehalte betragen 3000 ppm (Beispiel 34) bzw. 1950 ppm (Beispiel 35).

Beispiel 36

In der für die Beispiele 1 und 2 beschriebenen Weise wurde ein Konzentrat aus Polyethylen und 3 % Tris(2,4-di-t-butylphenylphosphit) (Irgafos 168, ein Produkt von Ciba-Geigy) hergestellt.

Die theoretische Phosphorgehalt beträgt 1900 ppm.

Beispiele 37-41

Die in den Beispielen 1-5 hergestellten Konzentrate wurden mit PA65 ($n_{rel}$ = 4,0)-Granulat trockenvermischt und über einen ZSK-53 Doppelwellenextruder bei 270° C und einem Durchsatz von 30 kg $h^{-1}$ vermischt.

Die Festphasennachkondensation erfolgte in einem rotierenden Gefäß bei 170° (je 0, 3, 7, 14 h), 50 $Umin^{-1}$ und 40 $l_{N2}$ $h^{-1}$.

Die Zusammensetzung der Proben und die Ergebnisse der Festphasennachkondensation sind in Tabelle 6 angegeben.

Vergleichsbeispiel 8

In derselben Weise wurde das reine PA6-Granulat nachkondensiert (Tabelle 6).

Tabelle 6

| Beispiel | Konzentrat nach Bsp. | | P-Gehalt theor. | $\eta_{rel}$ | | | |
|---|---|---|---|---|---|---|---|
| | [Gew.-% bez. auf PA] | | [ppm] | 0 | 3 | 7 | 14h |
| 37 | 1,66 | 32 | 48,9 | 4,3 | 4,6 | 6,8 | 8,7 |
| 38 | 2,78 | 33 | 52,8 | 4,2 | 4,5 | 6,1 | 7,3 |
| 39 | 1,66 | 34 | 48,9 | 4,2 | 4,3 | 5,6 | 7,1 |
| 40 | 2,78 | 35 | 52,8 | 3,9 | 4,45 | 5,2 | 6,4 |
| 41 | 2,62 | 36 | 49,7 | 4,2 | 5,1 | 5,8 | 7,7 |
| Vgl. 8 | - | | - | 4,05 | 4,1 | 4,3 | 4,5 |

Beispiel 42

9 kg ε-Caprolactam und 1 kg ε-Aminocapronsäure wurden in einen 25 l-Autoklaven gefüllt. Nach Inertisierung wurde unter 2 bar Eigendruck auf 200° C aufgeheizt, 1 h gehalten und anschließend unter Entspannen bis auf Atmosphärendruck und Überleiten von 40 l$N_2$ $h^{-1}$ auf 270° C aufgeheizt. Nach 2 h war die geschwünschte Schmelzviskosität erreicht. Es wurde in ein Wasserbad abgesponnen, gehäckselt und mit Wasser extrahiert (24 h). Das Produkt wies nach Trocknung einen Endgruppengehalt von 0,07 Gew.-% $NH_2$ und 0,095 Gew.-% COOH auf. Die relative Viskosität betrug 3,1.

Beispiel 43

In derselben Weise wurde ein Polyamid 6 hergestellt, bei dem zum Reaktionsansatz zusätzlich 33,5 g 75 %ige wäßrige Hexamethylendiaminlösung gegeben wurden. Die Reaktionszeit betrug 3-4 h bei 270° C, $\eta_{rel}$ lag bei 2,9-3,0, die Endgruppengehalte lagen bei 0,106 Gew.-% $NH_2$ und < 0,05 Gew.-% COOH.

Beispiele 44 + 45

Die in den Beispielen 42 und 43 hergestellten Polyamide wurden mit je 10 Gew.-% eines Ethylen-Acrylester-Acrylsäure-Terpolymeren(Lucalen 2920 M, ein Produkt der BASF AG) sowie mit je 1,5 Gew.-% Konzentrat nach Bei spiel 3 bei 250° C und 30 kg $h^{-1}$ Durchsatz über einen ZSN-53-Doppelwellenextruder compoundiert und anschließend nachkondensiert (Tabelle 7).

Vergleichsbeispiele 9 + 10

In derselben Weise wurden Compounds ohne Konzentrat hergestellt und nachkondensiert (Tabelle 7).

Tabelle 7

| Beispiel | Polyamid lt.Beisp. | $H_3PO_4$-Konz. [Gew.-%] | $\eta_{rel}$ | $\eta_{rel}$ nach + [h] bei T [°C] | | | | | | |
|---|---|---|---|---|---|---|---|---|---|---|
| | | | | T=170°C: | 3 | 7 | 14 h | T=180°C: | 5 | 15 h |
| 44 | 42 | 1,5 | 3,3 | | 4,25 | 6,25 | 7,1 | | 6,4 | 8,2 |
| 45 | 43 | 1,5 | 3,05 | | 3,0 | 3,8 | 4,5 | | 4,5 | 5,2 |
| Vgl. 9 | 42 | - | 3,3 | | 3,5 | 3,7 | 4,6 | | 3,65 | 4,1 |
| Vgl. 10 | 43 | - | 3,1 | | 3,1 | 3,1 | 3,1 | | 3,3 | 3,4 |

Wie die Beispiele zeigen, kann nach dem erfindungsgemäßen Verfahren die Geschwindigkeit der Festphasennachkondensation drastisch gesteigert werden, und es können auch Produkte sehr hoher Molekulargewichte erhalten werden. Dabei kann es (beispielsweise bei elastomermodifizierten Polyamiden) vorteilhaft bzw. notwendig sein, bestimmte Endgruppenverhältnisse einzustellen. In solchen Fällen werden erfindungsgemäß bevorzugt Primärpolyamide mit dem besonders günstigen Endgruppenverhältnis eingesetzt.

## Ansprüche

1. Verfahren zur Herstellung teilchenförmiger, hochmolekularer Polyamide durch katalysierte Festphasennachkondensation, dadurch gekennzeichnet, daß

A. vergleichweise niedermolekulare, teilchenförmige Polyamide, deren relative Viskosität (1 gew.-%ige Lösung in m-Kresol; 25°C) im Bereich von 2,4-5,5, bevorzugt 2,7-4,5 und besonders bevorzugt 3,3-4,5 liegen mit

B. mindestens einem Konzentrat (Masterbatch), hergestellt aus

B.1 mindestens einer Phosphorverbindung, ausgewählt aus den Verbindungen der allgemeinen Formeln (I) - (V)

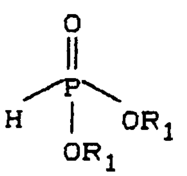

(I)

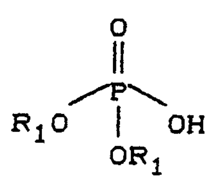

(II)

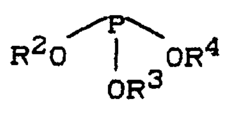

(III)

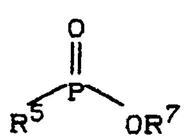

(IV)

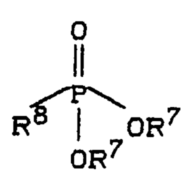

(V)

wobei

$R_1$ unabhängig voneinander für Wasserstoff oder einen (Ar)alkylrest mit 1 bis 22 C-Atomen oder einen (Alk)arylrest mit 1 bis 20 C-Atomen oder für Metallatome wie Na, K, oder auch für $NH_4$ steht,

oder auch der entsprechenden oligomeren oder polymeren Homologen der Verbindungen (I) und (II), die offenkettig oder cyclisch sein können, und ihrer Salze (Na, K, $NH_4$ u.a.m.) bzw. Ester, und

wobei

$R^2$ - $R^4$, $R^8$ unabhängig voneinander eine $C_{1-22}$-(Ar)alkylrest oder einen $C_{6-25}$-(Alk)arylrest bedeuten,

$R^5$, $R^6$ unabhängig voneinander H oder einen (Ar)alkyl-rest mit 1 bis 22 C-Atomen oder einen (Alk)-arylrest

mit 6 bis 25 C-Atomen bedeutet,

$R^7$ unabhängig voneinander Wasserstoff oder Metallatome wie Na, K, oderauch $NH_4$ bedeuten oder auch gleich $R^2$-$R^4$ ist, und wobei die Reste $R_5$, $R_6$, $R_8$ auch mehrbindig sein können, so daß mehr als ein Phosphoratom pro Molekül enthalten sein kann,

und einem

B.2 (vorzugsweise, jedoch nicht notwendigerweise, gleich hoch oder niedriger als das Polyamid-A. schmelzenden bzw. erweichenden) Thermoplasten, in der Schmelze homogen vermischt werden, die Schmelze abgekühlt und granuliert wird und das Granulat in üblicher Weise in der festen Phase bei Temperaturen von ungefähr 145 bis 195 °C nachkondensiert wird, wobei Phosphorgehalt des nachkondensierten Polyamid-Granulats im Bereich von 5 bis 300 ppm liegt, und wobei die Anfangsgeschwindigkeit der Nachkondensation um mindestens 100 % erhöht ist gegenüber einem Katalysator-freien Polyamid, wobei die Herstellung der Konzentrate B., wenn der Trägerthermoplast B.2 ein Polyamid ist, auch durch Polykondensation bzw. Polymerisation der Polyamid-bildenden Bausteine bei Anwesenheit der entsprechenden Menge an Katalysator B.1 erfolgen kann.

2. Verfahren nach Anspruch 1, dadurch gekennzeichnet, daß als Verbindungen der Formeln (I)-(V) bevorzugt Phosphorsäure und ihre höheren Homologen (Diphosphorsäure etc.), die oben definierten Natrium-, Ka lium- und Ammoniumsalze dieser Säuren sowie phosphorige Säure und ihre oben definierten Natrium-, Kalium- und Ammoniumsalze, Triester der phosphorigen Säure wie Triphenylphosphit, Tris(nonylphenyl)-phosphit, Tris-(2,4-di-t-butylphenyl)- und Tristearylphosphit, sowie Phosphonsäuren wie Methylphosphonsäure oder Phenylphosphonsäure, Phosphonsäureester wie Phenylphosphonsäuremonomethyl- und Diphenylester, oben definierte Phosphonsäuresalze wie Narium-, Kalium- oder Ammoniumphosphonate, Hyphosphorige Säure und ihre oben definierten Salze (Na, K, $NH_4$) bzw. Ester, Diphosphonsäuren wie Ethan-1,2-diphosphonsäure und Polyvinylphosphonsäuren eingesetzt werden.

3. Verfahren nach Anspruch 1, dadurch gekennzeichnet, daß als Konzentratthermoplaste B.2 bevorzugt PA 6, PA 66, 6/66-Copolyamide, PA 11, PA 12, 6/11- bzw. 6/12-Copolyamide, PA 610, PA 1010, PA 1012, Polyetheramide, Polyetheresteramide, PA 12 12, (gegebenenfalls säurefunktionenhaltige) Polymerisate wie Polyethylen, Polypropylen, Polystyrol, Styrol-Acrylnitrilcopolymere, Polymethylmethacrylat, thermoplatische Polyurethane, Ethylen-Propylen-Copolymere, Copolymere von Ethylen oder Propylen mit höheren α-Olefinen oder Acrylaten, Butadien-Styrol-Blockcopolymere und andere mehr eingesetzt werden, wobei für die Verbindungen (III) bei Herstellung des Konzentrats durch Compoundierung als Thermoplaste 2.2. Polymerisate bevorzugt sind.

4. Verfahren nach Anspruch 1, dadurch gekennzeichnet, daß die phosphorhaltigen Katalysatoren B.1. bei der Herstellung der Konzentrate zu 0,05-20 %, bevorzugt zu 0,2-10 %, eingesetzt werden, und daß nach Vermischen des Polyamids A. mit dem Konzentrat B. der Phosphorgehalt des nachzukondensierenden Polyamid-Granulats im Bereich von 5 bis 300 ppm, bevorzugt 20 bis 200 ppm und besonders bevorzugt 20 bis 100 ppm Phosphor, bezogen auf den Polyamidanteil, liegt.

5. Verfahren nach Anspruch 1, dadurch gekennzeichnet, daß die Festphasennachkondensation in an sich üblicher Weise bei Temperaturen von ungefähr 145 bis 195 °C, bevorzugt 150-190 °C und besonders bevor-zugt 160-185 °C, wobei die Verweilzeiten im Bereich von 1 bis 100 h, bevorzugt 2 bis 50 h und besonders bevorzugt 5-35 h liegen, und wobei die längeren Reaktionszeiten bevorzugt bei tieferen Temperaturen und umgekehrt angewendet werden, durchgeführt wird.

6. Verfahren nach Anspruch 1, dadurch gekennzeichnet, daß Zusatzstoffe wie Füll- oder Verstärkungsstoffe, polymere Legierungspartner (gegebenenfalls Verträglichkeitsvermittler), UV-Stabilisatoren, Antioxidantien, Pigmente, Farbstoffe, Flammschutzmittel, die Wasseraufnahme verringernde Zusätze, Nukleiermittel, Antinukleiermittel, Entformungs- und Gleitmittel in den hochmolekularen Polyamiden enthalten sein können, wobei die Zusatzstoffe beispielsweise, je nach Natur und Bedarf, den Ausgangsstoffen zur Synthese des Primärpolyamids A., während der Einarbeitung der Katalysatorkonzentrate oder auch unmittelbar vor der Verarbeitung zugegeben werden können.

7. Verfahren nach Anspruch 1, dadurch gekennzeichnet, daß Granulat oder auch geformte Teile, bevorzugt Granulat, nachkondensiert werden.

8. Verfahren nach Anspruch 1, dadurch gekennzeichnet, daß als nachzukondensierende Polyamide A. bevorzugt PA 6 bzw. 66 sowie ihre Copolyamide und besonders bevorzugt PA 6 und Copolyamide auf Basis PA 6 eingesetzt werden.

9. Hochmolekulare Polyamide, hergestellt nach dem Verfahren der Ansprüche 1 bis 8, insbesondere mit $\eta_{rel}$ -Werten von mindestens 6,5 bevorzugt 7,0 und insbesondere 7,5.

10. Verwendung der Polyamide nach Anspruch 9 zur Herstellung von geformten Körpern, Folien, Fasern und anderen Gegenständen, bevorzugt nach Verfahren der Extrusion und des Extrusionsblasformens oder auch anderen, und aus diesen Polyamiden hergestellte geformte Teile, Folien, Fasern und andere Gegen-

stände.